# EUROPEAN PATENT SPECIFICATION

(11) **EP 1 370 459 B1**
(45) Date of publication and mention of the grant of the patent: **11.07.2012**
(21) Application number: 02712579.8
(22) Date of filing: 22.02.2002
(51) Int. Cl.: B63H 20/08, B63B 1/22

(54) **WATER VESSEL WITH STERN PROPULSION**
WASSERFAHRZEUG MIT HECKANTRIEB
EMBARCATION A PROPULSION ARRIERE

(30) Priority: 26.02.2001 SE 0100666
(43) Date of publication of application: 17.12.2003
(73) Proprietor: Hallstensson, Stefan, 691 52 Karlskoga (SE)
(72) Inventor: Hallstensson, Stefan, 691 52 Karlskoga (SE)
(74) Representative: Wern, Lars A.
(86) International application number: PCT/SE2002/000282
(87) International publication number: WO 2002/068263

(56) References cited:
- US-A- 4 908 766
- US-A- 5 263 432
- US-A- 5 474 012

## Description

The present invention relates to a water vessel with stern propulsion such as disclosed in US-A-5474 012.

The water resistance is a significant consideration for such vessels in that the higher the water resistance is the higher the consumption of fuel will be. It is therefore desirable to reduce the consumption of fuel to the lowest possible level.

The object of the present invention is to create an arrangement that can influence the direction of the propulsion force and also influence the adjustment of existing trimming bodies. The positions of said three units are transmitted to the arrangement and the arrangement also has information about the speed of the propulsion force. By influencing the trimming bodies and adjusting the propulsion force the water resistance of the vessel is reduced to the lowest possible level. Further, there is a gauging instrument for said settings. The minimum level of water resistance for different speeds of propulsion can be determined by tests. The tests can then be used in a computer program so that the arrangement automatically adjusts settings to achieve minimum water resistance for each speed.

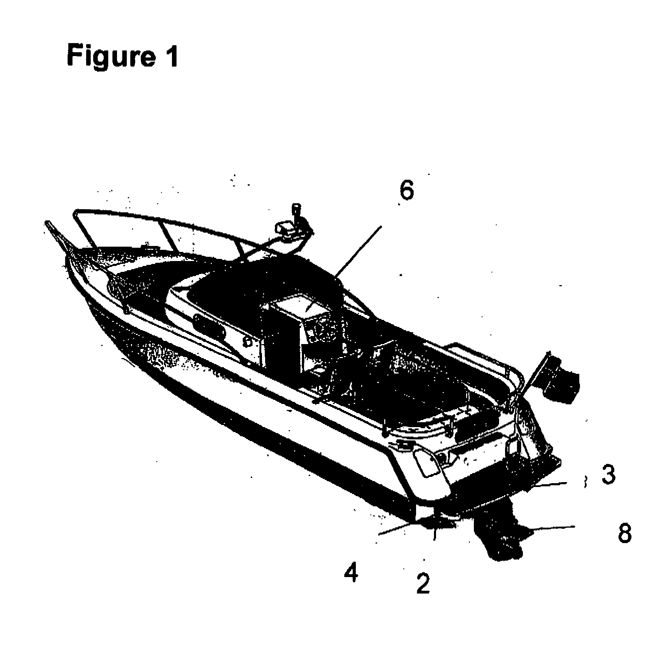

The present invention will be further described in connection with the accompanying drawings, in which
- Figure 1: shows a high-speed water vessel,
- Figure 2: shows schematically the stern part of the vessel with a trimming body and its adjustment unit, and
- Figure 3: shows the stern part of the vessel with stern propulsion and its adjustment unit.

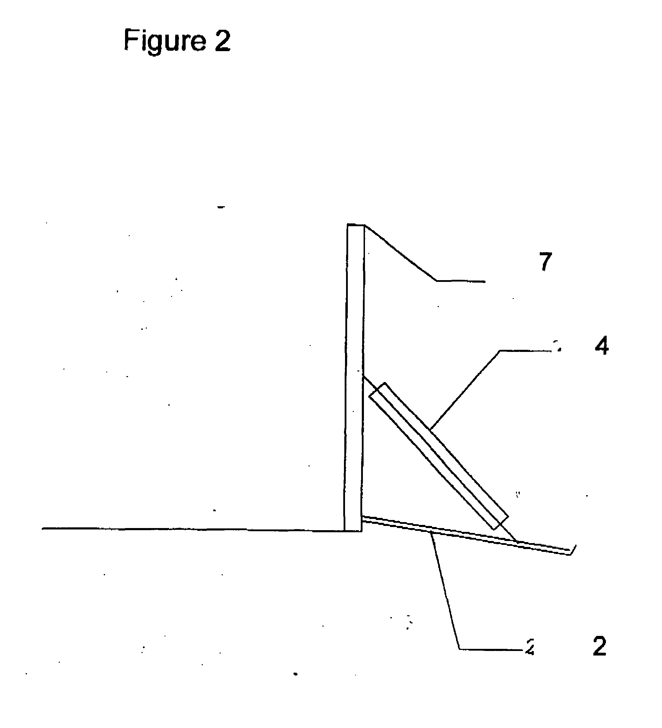

The drawings show a water vessel 1, having two trimming bodies 2 and 3 that are pivotably arranged about the stern part 7, as clearly illustrated in Figure 2. Adjacent to the stern part 7, the trimming body has a conventional auxiliary device that enables the trimming body 2 to be pivoted up and down and an adjustment unit 4 has duly been arranged for this purpose. This can be a hydraulic cylinder, for instance. Alternatively, another known actuator that can be remote-controlled so that the trimming body 2 obtains a movement up and down can be used. Two trimming bodies 2 and 3 are shown in the drawings, but a large number of variations are conceivable with respect to the number and placement of trimming bodies.

The water vessel 1 has stern propulsion, that is a rudder and propeller forming a unit that co-operates with the adjustment unit 5 that can be pivoted about a substantially vertical axis and, likewise, about a substantially horizontally axis. The positions of the trimming bodies 2 and 3 and of the stern propulsion 8 are transmitted to a central unit 6. Information about the speed of the water vessel is sent to this central unit 6. The stern propulsion 8 can be provided by an inboard or an outboard motor.

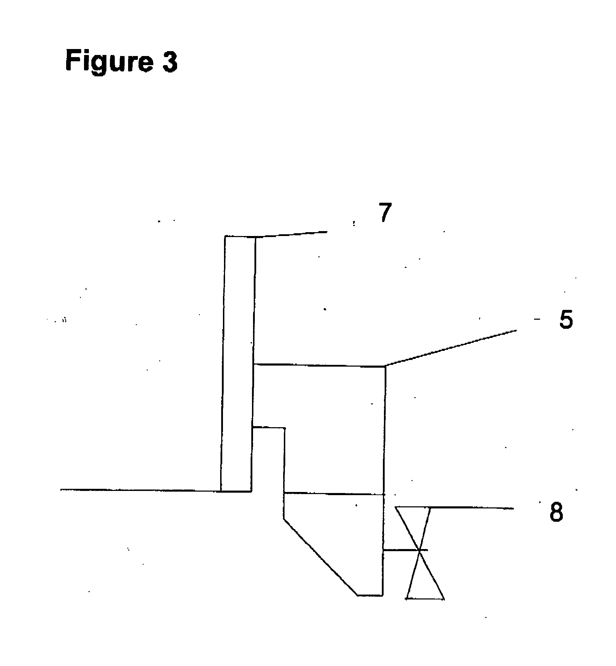

Figure 3 shows that the propulsion occurs by propeller drive, but it is also conceivable to substitute jets of a desired kind, such as air jets or water jets, for the propeller drive. The settings for the trimming bodies and the stern propulsion that provide the least water resistance can be ascertained by manual testing at different speeds. Such testing can take place for each individual vessel. The testing results can be programmed and fed to a computer arrangement that automatically adjusts the trimming bodies and the stern propulsion so that they assume positions providing the least water resistance.

## Claims

1. A water vessel (1) provided with stern propulsion (8), such as propeller drive or jet drive, and at least one movable trimming body (2, 3), such as a trimming plate, the water vessel (1) being provided with a control system (6) to which an adjustment unit (4) for the trimming body (2, 3) is connected and to which information about the speed of the water vessel is arranged to be sent, **characterized thereby** that an adjustment unit (5) for the direction of the stern propulsion (8) is connected to the control system (6), that position data about the stern propulsion (8) as well as about the trimming body (2,3) is arranged to be sent to the control system (6), and that the adjustment unit (5) for the stern propulsion (8) is, as well as the adjustment unit (4) for the trimming body (2,3), arranged to be influenced by the control system (6) in such a way that minimum water resistance is obtained during operation of the water vessel.

2. A water vessel (1) according to claim 1, wherein the stern propulsion (8) is arranged to be pivotable about a central point in a substantially vertical plane.

## Patentansprüche

1. Wasserfahrzeug (1) mit einem Heckantrieb (8), wie einer Schiffsschraube oder einem Jet, und mit zumindest einem beweglichen Trimmkörper (2,3), wie einer Trimmplatte, wobei das Wasserfahrzeug (1) mit einem Steuersystem (6) ausgestattet ist, mit/zu dem eine (erste) Einstelleinheit (4) für den Trimmkörper (2,3) verbunden ist und zu dem Informationen über die Geschwindigkeit des Wasserfahrzeugs übermittelbar oder übertragbar ist, **dadurch gekennzeichnet, dass** eine (zweite) Einstelleinheit (5) für die Richtung des Heckantriebs (8) mit dem Steuersystem (6) gekoppelt oder verbunden ist, dass Positionsdaten über den Heckantrieb (8) sowie über den Trimmkörper (2,3) zum Kontrollsystem (6) übertragbar sind, und dass die (zweite) Einstelleinheit (5) für den Heckantrieb (8) eingerichtet ist, ebenso wie die (erste) Einstelleinheit (4) für den Trimmkörper (2,3), von dem Steuersystem (6) in einer Weise beeinflusst zu werden, dass ein Wasserwiderstand, der während des Betriebs des Wasserfahrzeugs entsteht oder erhalten wird, verkleinert wird oder minimiert wird.

2. Wasserfahrzeug (1) nach Anspruch 1, wobei der Heckantrieb (8) eingerichtet ist, schwenkbar um ein zentralen Punkt in einer im Wesentlichen vertikalen Ebene zu sein, oder der Heckantrieb (8) um einen zentralen Punkt in einer im Wesentlichen vertikalen Ebene schwenkbar ist.

## Revendications

1. Bateau (1) pourvu d'une propulsion arrière (8), telle qu'une propulsion à hélice ou à jet, et d'au moins un corps de compensation d'assiette mobile (2, 3), telle qu'une plaque de compensation d'assiette, le bateau (1) étant pourvu d'un système de commande (6) auquel une unité de réglage (4) du corps de compensation d'assiette (2,3) est connectée et auquel l'information concernant la vitesse du bateau est agencée pour être envoyée **caractérisé en ce qu'**une unité de réglage (5) de la direction de la propulsion arrière (8) est connectée au système de commande (6), **en ce que** les données de position concernant la propulsion arrière (8) ainsi que concernant le corps de compensation d'assiette (2, 3) sont agencées pour être envoyées au système de commande (6), et **en ce que** l'unité de réglage (5) de la propulsion arrière (8) est, comme l'unité de réglage (4) du corps de compensation d'assiette (2,3), agencée pour être influencée par le système de commande (6) de manière à ce qu'une résistance minimum de l'eau soit obtenue pendant l'opération du bateau.

2. Bateau (1) selon la revendication 1, dans lequel la propulsion arrière (8) est agencée pour être pivotable autour d'un point central dans un plan sensiblement vertical.
